# FASCICULE DE BREVET EUROPEEN

(11) **EP 3 725 197 B1**
(45) Date de publication et mention de la délivrance du brevet: **03.08.2022**
(21) Numéro de dépôt: 20164940.7
(22) Date de dépôt: 23.03.2020
(51) Int. Cl.: A47J 43/08, A47J 43/044, A47J 43/06

(54) **BOITIER MOTORISE D'APPAREIL ELECTROMENAGER DE PREPARATION CULINAIRE**
MOTORISIERTES GEHÄUSE EINES HAUSHALTSGERÄTS FÜR KULINARVORBEREITUNG
MOTORIZED CASING OF A HOUSEHOLD APPLIANCE FOR CULINARY PREPARATION

(30) Priorité: 15.04.2019 FR 1903997
(43) Date de publication de la demande: 21.10.2020
(73) Titulaire: SEB S.A., 69130 Ecully (FR)
(72) Inventeur: GUILMART, Philippe, 53300 SAINT-MARS-SUR-COLMONT (FR)
(74) Mandataire: SEB Développement

(56) Documents cités:
- EP-A1- 2 193 734
- FR-A1- 2 233 019
- US-A1- 2009 284 027
- US-B1- 6 193 404

## Description

La présente invention concerne le domaine technique des appareils électroménagers de préparation culinaire comportant un moteur électrique à courant alternatif.

La présente invention concerne plus particulièrement les boîtiers motorisés des appareils électroménagers de préparation culinaire du type précité.

La présente invention concerne notamment, mais non exclusivement, les boîtiers motorisés configurés pour être tenus à la main.

La présente invention concerne notamment, mais non exclusivement, les boîtiers motorisés assemblés avec un accessoire amovible tel que par exemple un pied mixeur plongeant.

Les moteurs électriques à courant alternatif comportent un stator comprenant un empilage de tôles s'étendant selon un axe correspondant à l'axe de rotation du rotor. Ces tôles sont agencées entre deux étriers. Du fait des tolérances sur l'épaisseur des tôles, l'épaisseur de l'empilage de tôles présente une certaine dispersion d'un moteur électrique à l'autre. La distance entre les deux étriers selon l'axe de rotation présente ainsi également une certaine dispersion. C'est pourquoi il est usuel dans les boîtiers motorisés de pied mixer de maintenir le moteur électrique à courant alternatif à l'intérieur des demi-coques du boîtier à l'aide d'un amortisseur souple assemblé sur le moteur.

Il est connu du document EP1529474 de réaliser un boîtier motorisé d'appareil électroménager de préparation culinaire dans lequel un moteur repose sur un boîtier par l'intermédiaire d'éléments amortisseurs disposés aux extrémités longitudinales dudit moteur, lesdits éléments amortisseurs d'extrémité étant reliés entre eux par au moins un bras de liaison élastique de manière à former une seule pièce interface, ledit bras de liaison assurant le maintien des éléments amortisseurs sur les extrémités longitudinales du moteur.

Une telle réalisation permet d'assurer un maintien satisfaisant des moteurs électriques à courant alternatif en prenant en compte leurs tolérances dimensionnelles axiales. Toutefois de tels amortisseurs sont des composants spécifiques, plutôt onéreux, qui nécessitent un montage précis pour être efficaces.

Il est connu du document WO2017143534 de réaliser un boîtier motorisé d'appareil électroménager de préparation culinaire dans lequel un moteur comporte un cadre de connexion s'étendant de part et d'autre des tôles d'un stator, et dans lequel chacune des extrémités du cadre est montée dans une rondelle élastique retenue entre les deux demi-coques du boîtier logeant le moteur.

Une telle réalisation permet de prendre en compte les tolérances dimensionnelles axiales des moteurs électriques à courant alternatif. Toutefois le montage du moteur sur deux rondelles élastiques peut rendre délicate l'obtention d'un maintien satisfaisant du moteur.

Un appareil selon le préambule de la revendication 1 est connu du document FR2233019.

Un objet de la présente invention est de proposer un boîtier motorisé d'appareil électroménager de préparation culinaire comportant un moteur électrique à courant alternatif, qui présente une construction plus économique, tout en assurant un maintien satisfaisant dudit moteur électrique à courant alternatif malgré ses tolérances dimensionnelles.

Un autre objet de la présente invention est de proposer un boîtier motorisé d'appareil électroménager de préparation culinaire comportant un moteur électrique à courant alternatif, qui présente une construction économique, tout en assurant un maintien satisfaisant dudit moteur électrique à courant alternatif malgré ses tolérances dimensionnelles, et malgré les déformations de l'enveloppe extérieure du boîtier motorisé au cours de la vie de l'appareil électroménager de préparation culinaire.

Ces objets sont atteints avec un boîtier motorisé d'appareil électroménager de préparation culinaire selon la revendication 1.

Ces caractéristiques permettent d'obtenir un maintien satisfaisant des moteurs électriques à courant alternatif, malgré leurs tolérances dimensionnelles axiales, avec une construction économique.

Avantageusement alors, ladite au moins une première butée transversale interne est agencée entre l'entraîneur et le stator.

Cette disposition permet d'avoir un appui rigide du côté de l'entraîneur, ce qui permet de faciliter le contrôle de la position de l'entraîneur dans l'enveloppe extérieure.

Avantageusement encore, l'enveloppe extérieure comporte au moins une troisième butée transversale interne plus rigide selon la direction définie par l'axe de rotation que la deuxième butée transversale interne, et le stator est bloqué selon la direction définie par l'axe de rotation entre ladite au moins une première butée transversale interne et ladite au moins une troisième butée transversale interne.

Cette disposition permet d'obtenir un maintien axial du moteur électrique entre la première butée transversale interne et ladite au moins une troisième butée transversale interne, ladite au moins une deuxième butée transversale interne pouvant ainsi avoir un appui rigide du côté de l'entraîneur, ce qui permet de limiter les efforts sur ladite au moins une deuxième butée transversale interne.

Avantageusement encore, l'enveloppe extérieure comporte deux premières butées transversales internes agencées de part et d'autre de l'axe de rotation et deux deuxièmes butées transversales internes agencées de part et d'autre de l'axe de rotation, les deuxièmes butées transversales internes étant plus souples selon la direction définie par l'axe de rotation que les premières butées transversales internes; et le stator est maintenu selon la direction définie par l'axe de rotation entre les deux premières butées transversales internes et les deux deuxièmes butées transversales internes.

Cette disposition permet d'équilibrer les efforts de retenue du moteur électrique de part et d'autre de l'axe de rotation.

Avantageusement encore, l'enveloppe extérieure comporte deux troisièmes butées transversales internes agencées de part et d'autre de l'axe de rotation et plus rigides que les deuxièmes butées transversales internes, le stator étant bloqué selon la direction définie par l'axe de rotation entre les deux premières butées transversales internes et les deux troisièmes butées transversales internes.

Cette disposition permet d'améliorer la retenue du moteur électrique.

Avantageusement encore, l'enveloppe extérieure comprend une première demi-coque entourant partiellement le moteur électrique à courant alternatif, et ladite au moins une première butée transversale interne est directement issue de la première demi-coque.

Cette disposition contribue à l'obtention d'une construction particulièrement économique.

Avantageusement alors, ladite au moins une deuxième butée transversale interne est directement issue de la première demi-coque.

Cette disposition contribue à l'obtention d'une construction particulièrement économique.

Avantageusement alors, ladite au moins une troisième butée transversale interne est directement issue de la première demi-coque.

Cette disposition contribue à l'obtention d'une construction particulièrement économique.

Avantageusement encore, l'enveloppe extérieure comprend une deuxième demi-coque entourant partiellement le moteur électrique à courant alternatif.

Cette disposition contribue à l'obtention d'une construction particulièrement économique.

Avantageusement alors, la première demi-coque est directement assemblée avec la deuxième demi-coque.

Cette disposition contribue à l'obtention d'une construction particulièrement économique.

Avantageusement encore, l'enveloppe extérieure comporte deux premières butées latérales internes, et le stator est maintenu transversalement par rapport à la direction définie par l'axe de rotation entre les deux premières butées latérales internes.

Cette disposition contribue au maintien latéral du moteur électrique à l'intérieur de l'enveloppe extérieure.

Avantageusement alors, les deux premières butées latérales internes sont plus proches de ladite au moins une deuxième butée transversale interne que de ladite au moins une première butée transversale interne.

Cette disposition permet d'améliorer le maintien latéral du moteur électrique à l'intérieur de l'enveloppe extérieure.

Avantageusement alors, les deux premières butées latérales internes sont directement issues de la première demi-coque.

Cette disposition contribue à l'obtention d'une construction particulièrement économique.

Avantageusement encore, l'enveloppe extérieure comporte deux deuxièmes butées latérales internes, le stator est maintenu transversalement par rapport à la direction définie par l'axe de rotation entre les deux deuxièmes butées latérales internes, et le stator s'étend principalement selon la direction définie par l'axe de rotation entre les premières butées latérales internes et les deuxièmes butées latérales internes.

Cette disposition permet d'améliorer le maintien latéral du moteur électrique à l'intérieur de l'enveloppe extérieure.

Avantageusement alors, les deux deuxièmes butées latérales internes sont plus souples que les deux premières butées latérales internes dans la direction transversale à l'axe de rotation.

Cette disposition permet de mieux prendre en compte les tolérances dimensionnelles des moteurs électriques à courant alternatif.

Avantageusement encore, les deux deuxièmes butées latérales internes sont directement issues de la première demi-coque.

Cette disposition contribue à l'obtention d'une construction particulièrement économique.

Avantageusement alors, les deux deuxièmes butées latérales internes présentent chacune une section incurvée et comportent deux bords latéraux configurés pour venir en appui contre le stator, et la deuxième demi-coque comporte deux quatrièmes butées transversales internes configurées chacune pour venir en appui contre l'une des deuxièmes butées latérales internes entre les deux bords latéraux à l'opposé du stator afin de repousser ladite deuxième butée latérale interne vers le stator lorsque la première demi-coque et la deuxième demi-coque sont assemblées.

Cette disposition permet d'améliorer encore le maintien latéral du moteur électrique à l'intérieur de l'enveloppe extérieure.

Avantageusement encore, le stator est maintenu latéralement à l'intérieur de l'enveloppe extérieure par au moins un élément amortisseur agencé entre le stator et l'enveloppe extérieure.

Cette disposition permet de maintenir le moteur électrique lorsque l'enveloppe extérieure se déforme au cours de la durée de vie du boîtier motorisé.

Avantageusement encore, le stator est maintenu latéralement à l'intérieur de l'enveloppe extérieure entre un premier élément amortisseur et un deuxième élément amortisseur.

Cette disposition contribue à l'obtention d'une construction particulièrement économique.

Avantageusement alors, le premier élément amortisseur et le deuxième élément amortisseur sont annulaires et l'enveloppe extérieure comporte un premier élément de retenue interne, sur lequel est monté le premier élément amortisseur, et un deuxième élément de retenue interne, sur lequel est monté le deuxième élément amortisseur.

Cette disposition contribue à l'obtention d'une construction particulièrement économique.

Avantageusement encore, le premier élément amortisseur est porté par la première demi-coque et le deuxième élément amortisseur est porté par la deuxième demi-coque.

Cette disposition contribue à l'obtention d'une construction particulièrement économique.

D'autres caractéristiques et avantages de la présente invention apparaîtront plus clairement à la lecture de la description détaillée qui suit de deux exemples de réalisation, pris à titre nullement limitatif, illustrés dans les figures annexées, dans lesquelles :
La figure 1 représente une vue en coupe longitudinale d'un premier exemple de réalisation d'un boîtier motorisé d'appareil électroménager de préparation culinaire selon l'invention, dans laquelle une seconde demi-coque de l'enveloppe extérieure du boîtier motorisé a été retirée.
La figure 2 représente une vue en perspective d'une première demi-coque de l'enveloppe extérieure du boîtier motorisé illustré sur la figure 1.
La figure 3 représente une vue partielle en perspective de la première demi-coque de l'enveloppe extérieure illustrée sur la figure 2.
La figure 4 représente une autre vue partielle en perspective de la première demi-coque de l'enveloppe extérieure illustrée sur les figures 2 et 3.
La figure 5 représente une vue en perspective d'une deuxième demi-coque de l'enveloppe extérieure du boîtier motorisé illustré sur la figure 1.
La figure 6 représente une vue partielle en perspective de la deuxième demi-coque de l'enveloppe extérieure illustrée sur la figure 5.
La figure 7 représente une vue en coupe longitudinale d'un deuxième exemple de réalisation d'un boîtier motorisé d'appareil électroménager de préparation culinaire selon l'invention.
La figure 8 représente une vue en perspective d'une première demi-coque de l'enveloppe extérieure du boîtier motorisé illustré sur la figure 7.
La figure 9 représente une vue en perspective d'une deuxième demi-coque de l'enveloppe extérieure du boîtier motorisé illustré sur la figure 7.
La figure 10 représente une vue en perspective d'un accessoire pied mixer plongeant pouvant être utilisé avec le boîtier motorisé illustré sur la figure 1 ou avec le boîtier motorisé illustré sur la figure 7.

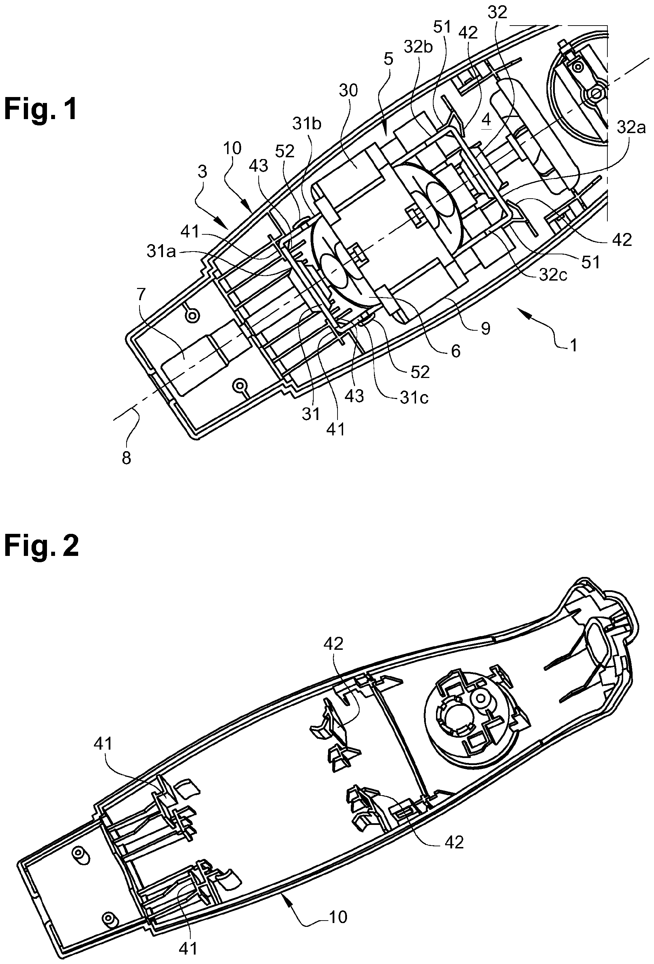

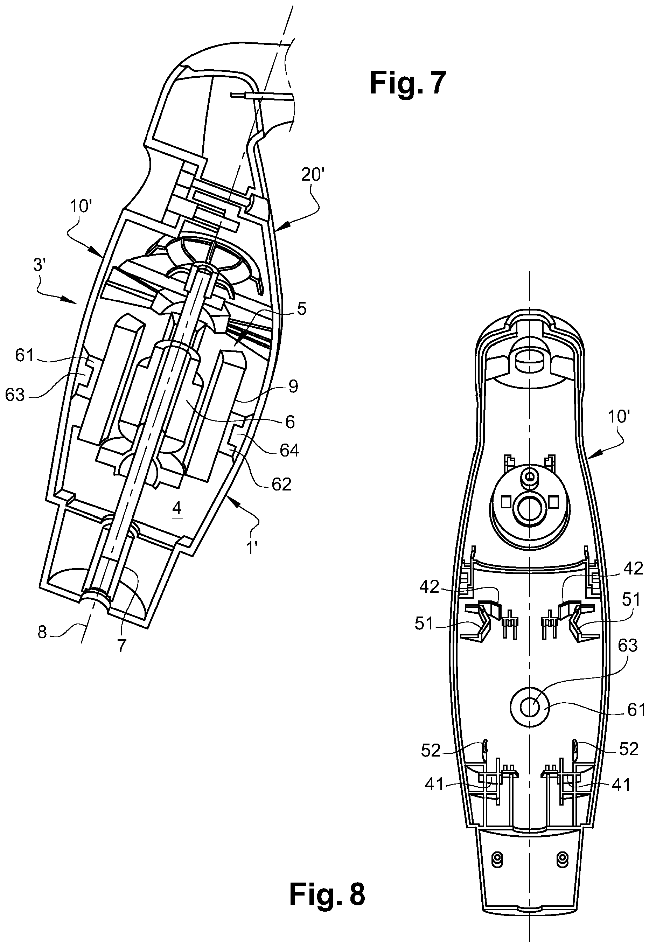

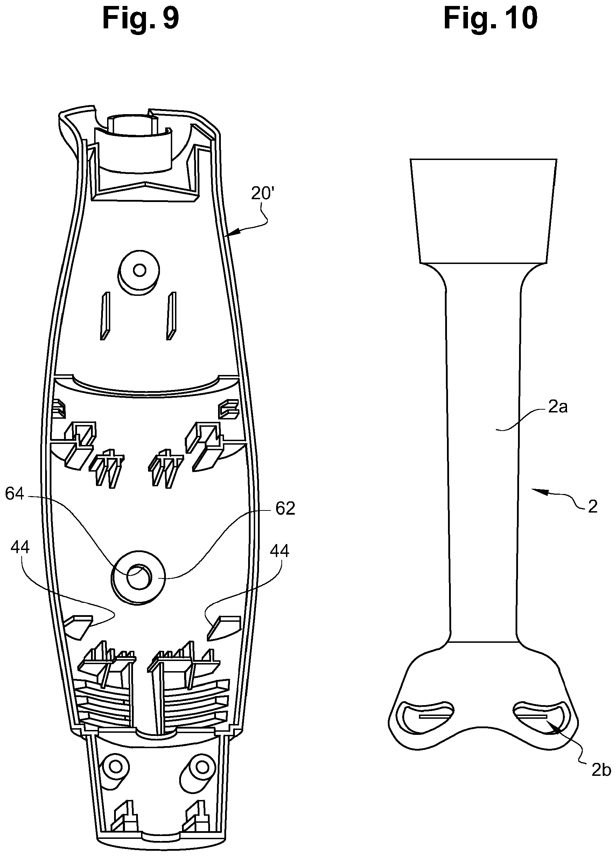

Les figures 1 à 6 illustrent un premier exemple de réalisation d'un boîtier motorisé 1 d'appareil électroménager de préparation culinaire. Les figures 7 à 9 illustrent un deuxième exemple de réalisation d'un boîtier motorisé 1' d'appareil électroménager de préparation culinaire. La figure 10 illustre un accessoire pied mixer plongeant 2 pouvant être utilisé avec le boîtier motorisé 1 ou avec le boîtier motorisé 1'. L'accessoire pied mixer plongeant 2 comporte un corps d'accessoire 2a et un outil rotatif 2b monté mobile en rotation dans le corps d'accessoire 2a. Le corps d'accessoire 2a peut notamment être assemblé par vissage ou par baïonnette avec le boîtier motorisé 1 ou avec le boîtier motorisé 1'.

Le boîtier motorisé 1 comporte une enveloppe extérieure 3 définissant un logement interne 4. Le boîtier motorisé 1 comporte un moteur électrique à courant alternatif 5 agencé dans le logement interne 4, le moteur électrique à courant alternatif 5 comportant un rotor 6 portant un entraîneur 7 mobile en rotation selon un axe de rotation 8, et un stator 9. L'entraîneur 7 est configuré pour entraîner en rotation l'outil rotatif 2b de l'accessoire pied mixer plongeant 2 assemblé avec le boîtier motorisé 1 ou avec le boîtier motorisé 1'.

Tel que visible sur la figure 1, le stator 9 comprend un premier étrier 31 et un deuxième étrier 32 montés de part et d'autre d'un empilage de tôles 30 selon l'axe de rotation 8. Le premier étrier 31 présente une première paroi d'extrémité 31a s'étendant transversalement par rapport à la direction définie par l'axe de rotation 8. Le deuxième étrier 32 présente une deuxième paroi d'extrémité 32a s'étendant transversalement par rapport à la direction définie par l'axe de rotation 8. La première paroi d'extrémité 31a est prolongée par deux premières parois latérales 31b, 31c. La deuxième paroi d'extrémité 32a est prolongée par deux deuxièmes parois latérales 32b, 32c. Les premières parois latérales 31b, 31c et les deux deuxièmes parois latérales 32b, 32c sont fixées au stator 9, par exemple par vissage.

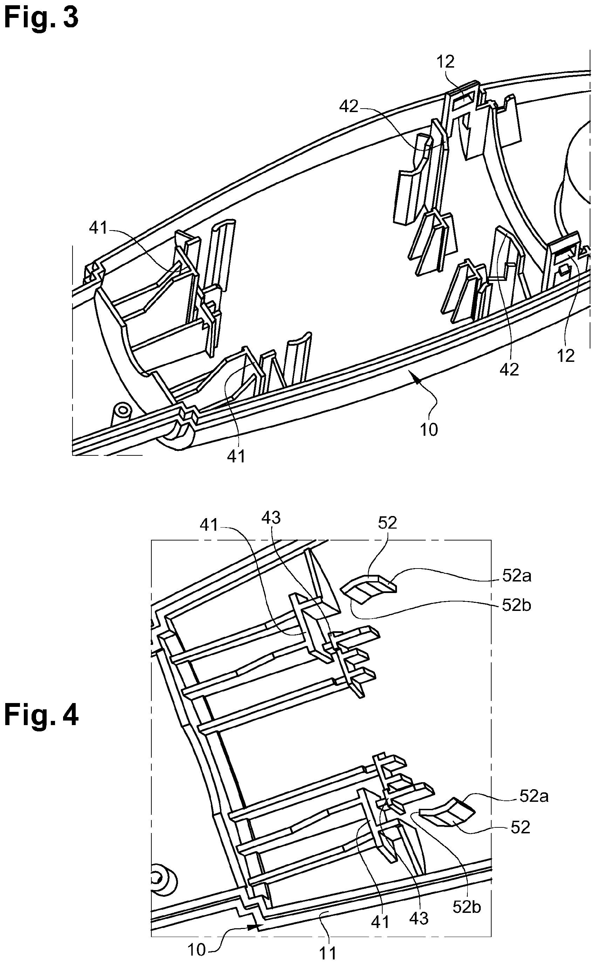

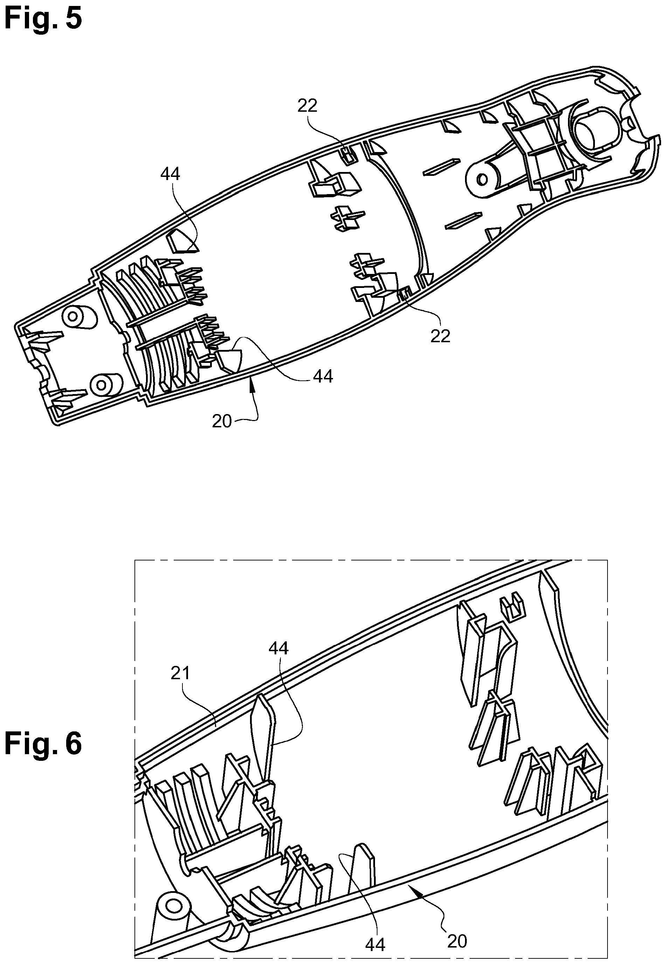

Plus particulièrement dans le premier exemple de réalisation illustré sur les figures 1 à 6 et dans le deuxième exemple de réalisation illustré sur les figures 7 à 9, l'enveloppe extérieure 3 comprend une première demi-coque 10 entourant partiellement le moteur électrique à courant alternatif 5, et une deuxième demi-coque 20 entourant partiellement le moteur électrique à courant alternatif 5. La première demi-coque 10 et la deuxième demi-coque 20 sont assemblées pour former l'enveloppe extérieure 3. De préférence, la première demi-coque 10 est directement assemblée avec la deuxième demi-coque 20. Tel que visible sur les figures 4 et 6, la première demi-coque 10 présente une bordure latérale interne 11 configurée pour s'emboiter à l'intérieur d'une bordure latérale externe 21 de la deuxième demi-coque 20. Tel que visible sur les figures 3 et 5, la première demi-coque 10 et la deuxième demi-coque 20 sont assemblées par clipsage. A cet effet la deuxième demi-coque 20 présente deux crochets 22 opposés configurés pour venir en prise dans deux organes de retenue 12 issus de la première demi-coque 10. A titre de variante, d'autres modes d'assemblage pourraient être envisagés, notamment un assemblage par vissage de la première demi-coque 10 avec la deuxième demi-coque 20. La première demi-coque 10 et la deuxième demi-coque 20 sont avantageusement réalisées en matière plastique, notamment en polypropylène (PP), ou en ABS.

Tel que visible sur les figures 1 à 4, l'enveloppe extérieure 3 comporte deux premières butées transversales internes 41 agencées de part et d'autre de l'axe de rotation 8. Tel que visible sur la figure 1, les premières butées transversales internes 41 viennent en appui contre la première paroi d'extrémité 31a du premier étrier 31.

Tel que visible sur les figures 1 à 3, l'enveloppe extérieure 3 comporte deux deuxièmes butées transversales internes 42 agencées de part et d'autre de l'axe de rotation 8. Tel que visible sur la figure 1, les deuxièmes butées transversales internes 42 viennent en appui contre la deuxième paroi d'extrémité 32a du deuxième étrier 32.

Tel que visible sur la figure 1, le stator 9 est maintenu selon la direction définie par l'axe de rotation 8 entre les deux premières butées transversales internes 41 et les deux deuxièmes butées transversales internes 42. Les deuxièmes butées transversales internes 42 sont plus souples selon la direction définie par l'axe de rotation 8 que les premières butées transversales internes 41. Tel que bien visible sur la figure 1, le stator 9 est maintenu directement entre les premières butées transversales internes 41 et les deuxièmes butées transversales internes 42. En d'autres termes, le stator est maintenu par les premières butées transversales internes 41 et les deuxièmes butées transversales internes 42 sans intermédiaire entre le stator 9 et les premières butées transversales internes 41, d'une part, ainsi qu'entre le stator 9 et les deuxièmes butées transversales internes 42, d'autre part.

Tel que bien visible sur la figure 1, les premières butées transversales internes 41 sont agencées entre l'entraîneur 7 et le stator 9.

Tel que mieux visible sur la figure 4, l'enveloppe extérieure 3 comporte deux troisièmes butées transversales internes 43 agencées de part et d'autre de l'axe de rotation 8. Les troisièmes butées transversales internes 43 sont plus rigides que les deuxièmes butées transversales internes 42. Tel que visible sur la figure 1, le stator 9 est bloqué selon la direction définie par l'axe de rotation 8 entre les deux premières butées transversales internes 41 et les deux troisièmes butées transversales internes 43. Plus particulièrement, tel que visible sur la figure 1, la première paroi d'extrémité 31a du premier étrier 31 est insérée entre les premières butées transversales internes 41 et les troisièmes butées transversales internes 43.

Dans l'exemple de réalisation illustré sur les figures 1 à 6, les premières butées transversales internes 41, les deuxièmes butées transversales internes 42, les troisièmes butées transversales internes 43 sont directement issues de la première demi-coque 10.

Tel que visible sur la figure 1, l'enveloppe extérieure 3 comporte deux premières butées latérales internes 51. Le stator 9 est maintenu transversalement par rapport à la direction définie par l'axe de rotation 8 entre les deux premières butées latérales internes 51. Les deux premières butées latérales internes 51 viennent en appui contre les deux deuxièmes parois latérales 32b, 32c.

Plus particulièrement dans l'exemple de réalisation illustré sur les figures 1 à 6, les deux premières butées latérales internes 51 sont plus proches des deuxièmes butées transversales internes 42 que des premières butées transversales internes 41. Les deux premières butées latérales internes 51 sont directement issues de la première demi-coque 10.

Tel que visible sur la figure 1, l'enveloppe extérieure 3 comporte deux deuxièmes butées latérales internes 52. Le stator 9 est maintenu transversalement par rapport à la direction définie par l'axe de rotation 8 entre les deux deuxièmes butées latérales internes 52. Le stator 9 s'étend selon la direction définie par l'axe de rotation 8 principalement entre les premières butées latérales internes 51 et les deuxièmes butées latérales internes 52. Les deux deuxièmes butées latérales internes 52 viennent en appui contre les deux premières parois latérales 31b, 31c.

Plus particulièrement dans l'exemple de réalisation illustré sur les figures 1 à 6, dans la direction transversale à l'axe de rotation 8 les deux deuxièmes butées latérales internes 52 sont plus souples que les deux premières butées latérales internes 51. Les deux deuxièmes butées latérales internes 52 sont directement issues de la première demi-coque 10. Tel que mieux visible sur la figure 4, les deux deuxièmes butées latérales internes 52 présentent chacune une section incurvée et comportent deux bords latéraux 52a, 52b. Les deux bords latéraux 52a, 52b sont configurés pour venir en appui contre le stator 9.

Tel que visible sur les figures 5 et 6, la deuxième demi-coque 20 comporte deux quatrièmes butées transversales internes 44. Chacune des quatrièmes butées transversales internes 44 est configurée pour venir en appui contre l'une des deuxièmes butées latérales internes 52 entre les deux bords latéraux 52a, 52b à l'opposé du stator 9, afin de repousser ladite deuxième butée latérale interne 52 vers le stator 9 lorsque la première demi-coque 10 et la deuxième demi-coque 20 sont assemblées. Ainsi les deux deuxièmes butées latérales internes 52 sont repoussées vers le stator 9 lorsque la première demi-coque 10 et la deuxième demi-coque 20 sont assemblées. La forme incurvée des deuxièmes butées latérales internes 52 et la souplesse des deuxièmes butées latérales internes 52 permet que les deuxièmes butées latérales internes 52 repoussées par les quatrièmes butées transversales internes 44 viennent en appui contre les deux premières parois latérales 31b, 31c du premier étrier 31. Un maintien latéral au niveau du premier étrier 31 peut ainsi être obtenu malgré les tolérances dimensionnelles de la largeur du premier étrier 31 entre les deux premières parois latérales 31b, 31c.

Selon l'invention, l'enveloppe extérieure 3 peut comporter au moins une première butée transversale interne 41 et au moins une deuxième butée transversale interne 42, le stator 9 étant maintenu selon la direction définie par l'axe de rotation 8 entre ladite au moins une première butée transversale interne 41 et ladite au moins une deuxième butée transversale interne 42, ladite au moins une deuxième butée transversale interne 42 étant plus souple selon la direction définie par l'axe de rotation 8 que ladite au moins une première butée transversale interne 41. Ainsi le stator 9 est maintenu directement entre ladite au moins une première butée transversale interne 41 et ladite au moins une deuxième butée transversale interne 42.

A titre de variante, l'enveloppe extérieure 3 peut comporter au moins une troisième butée transversale interne 43 plus rigide selon la direction définie par l'axe de rotation 8 que ladite au moins une deuxième butée transversale interne 42. Ainsi le stator 9 est bloqué selon la direction définie par l'axe de rotation 8 entre ladite au moins une première butée transversale interne 41 et ladite au moins une troisième butée transversale interne 43.

Le boîtier motorisé 1' illustré sur les figures 7 à 9 diffère du boîtier motorisé 1 illustré sur les figures 1 à 6 en ce que le stator 9 est maintenu latéralement à l'intérieur de l'enveloppe extérieure 3' entre un premier élément amortisseur 61 et un deuxième élément amortisseur 62.

Plus particulièrement dans l'exemple de réalisation illustré sur les figures 7 à 9, le premier élément amortisseur 61 et le deuxième élément amortisseur 62 sont annulaires. L'enveloppe extérieure 3' comporte un premier élément de retenue interne 63, sur lequel est monté le premier élément amortisseur 61, et un deuxième élément de retenue interne 64, sur lequel est monté le deuxième élément amortisseur 62.

Tel que mieux visible sur la figure 8, le premier élément amortisseur 61 est porté par la première demi-coque 10'. Le premier élément de retenue interne 63 est formé par des nervures en croix issues de la paroi interne de la première demi-coque 10'.

Tel que mieux visible sur la figure 9, le deuxième élément amortisseur 62 est porté par la deuxième demi-coque 20'. Le deuxième élément de retenue interne 64 est formé par des nervures en croix issues de la paroi interne de la deuxième demi-coque 20'.

A titre de variante, le stator 9 pourrait être maintenu latéralement à l'intérieur de l'enveloppe extérieure 3' par au moins un élément amortisseur agencé entre le stator 9 et l'enveloppe extérieure 3'. Si désiré ledit élément amortisseur peut entourer au moins partiellement le stator 9, de préférence sur au moins la moitié de la circonférence dudit stator 9.

Le boîtier motorisé 1, 1' s'utilise de la manière suivante. Le stator 9 du moteur électrique à courant alternatif 5 est inséré entre les premières butées transversales internes 41 et les deuxièmes butées transversales internes 42. Les deuxièmes butées transversales internes 42 plus souples que les premières butées transversales internes 41 selon la direction définie par l'axe de rotation 8 peuvent se déformer selon la direction définie par l'axe de rotation 8 pour assurer un appui élastique sur le stator 9 et repousser le stator 9 contre les premières butées transversales internes 41. Un montage satisfaisant du moteur électrique à courant alternatif 5 dans l'enveloppe extérieure 3 ; 3' prenant en compte les tolérances dimensionnelles du stator 9 la direction définie par l'axe de rotation 8 peut ainsi être obtenu. Dans la direction transversale à la direction définie par l'axe de rotation les tolérances dimensionnelles du stator 9 sont moins importantes. Les premières butées latérales internes 51 et les deuxièmes butées latérales internes 52 permettent d'assurer un maintien latéral du stator 9 à l'intérieur de l'enveloppe extérieure 3 ; 3'. Selon le deuxième exemple de réalisation, le premier élément amortisseur 61 et le deuxième élément amortisseur 62 permettent également d'assurer un maintien latéral du stator 9 à l'intérieur de l'enveloppe extérieure 3'.

A titre de variante, l'enveloppe extérieure 3 ; 3' peut comporter d'autres éléments que la première demi-coque 10 ; 10' et la deuxième demi-coque 20 ; 20'.

La présente invention n'est nullement limitée aux exemples de réalisation décrits et à leurs variantes, mais englobe de nombreuses modifications dans le cadre des revendications.

## Revendications

1. Boîtier motorisé (1 ; l') d'appareil électroménager de préparation culinaire, comportant une enveloppe extérieure (3 ; 3') définissant un logement interne (4) et un moteur électrique à courant alternatif (5) agencé dans le logement interne (4), le moteur électrique à courant alternatif (5) comportant un rotor (6) portant un entraîneur (7) mobile en rotation selon un axe de rotation (8), et un stator (9), dans lequel l'enveloppe extérieure (3 ; 3') comporte au moins une première butée transversale interne (41), et dans lequel le stator (9) est maintenu selon la direction définie par l'axe de rotation (8) entre ladite au moins une première butée transversale interne (41) et au moins une deuxième butée transversale interne (42), l'enveloppe extérieure (3 ; 3') comportant ladite au moins une deuxième butée transversale interne (42), le stator (9) étant maintenu directement entre ladite au moins une première butée transversale interne (41) et ladite au moins une deuxième butée transversale interne (42), **caractérisé en ce que** le stator comprend un premier étrier (31) et un deuxième étrier (32) montés de part et d'autre d'un empilage de tôles (30) selon l'axe de rotation (8), **en ce que** ladite au moins une deuxième butée transversale interne (42) est plus souple selon la direction définie par l'axe de rotation (8) que ladite au moins une première butée transversale interne (41), **en ce que** le premier étrier (31) présente une première paroi d'extrémité (31a) s'étendant transversalement par rapport à la direction définie par l'axe de rotation (8), **en ce que** le deuxième étrier (32) présente une deuxième paroi d'extrémité (32a) s'étendant transversalement par rapport à la direction définie par l'axe de rotation (8), **en ce que** ladite au moins une première butée transversale interne (41) vient en appui contre la première paroi d'extrémité (31a) du premier étrier (31) et **en ce que** ladite au moins une deuxième butée transversale interne (42) vient en appui contre la deuxième paroi d'extrémité (32a) du deuxième étrier (32).

2. Boîtier motorisé (1 ; 1') d'appareil électroménager de préparation culinaire selon la revendication 1, **caractérisé en ce que** ladite au moins une première butée transversale interne (41) est agencée entre l'entraîneur (7) et le stator (9).

3. Boîtier motorisé (1 ; l') d'appareil électroménager de préparation culinaire selon l'une des revendications 1 ou 2, **caractérisé en ce que** l'enveloppe extérieure (3 ; 3') comporte au moins une troisième butée transversale interne (43) plus rigide selon la direction définie par l'axe de rotation (8) que la deuxième butée transversale interne (42), et **en ce que** le stator (9) est bloqué selon la direction définie par l'axe de rotation (8) entre ladite au moins une première butée transversale interne (41) et ladite au moins une troisième butée transversale interne (43).

4. Boîtier motorisé (1 ; 1') d'appareil électroménager de préparation culinaire selon l'une des revendications 1 à 3, **caractérisé en ce que** l'enveloppe extérieure (3 ; 3') comporte deux premières butées transversales internes (41) agencées de part et d'autre de l'axe de rotation (8) et deux deuxièmes butées transversales internes (42) agencées de part et d'autre de l'axe de rotation (8), les deuxièmes butées transversales internes (42) étant plus souples selon la direction définie par l'axe de rotation (8) que les premières butées transversales internes (41), et **en ce que** le stator (9) est maintenu selon la direction définie par l'axe de rotation (8) entre les deux premières butées transversales internes (41) et les deux deuxièmes butées transversales internes (42).

5. Boîtier motorisé (1 ; 1') d'appareil électroménager de préparation culinaire selon l'une des revendications 1 à 4, **caractérisé en ce que** l'enveloppe extérieure (3 ; 3') comprend une première demi-coque (10 ; 10') entourant partiellement le moteur électrique à courant alternatif (5), et **en ce que** ladite au moins une première butée transversale interne (41) est directement issue de la première demi-coque (10 ; 10'), ladite au moins une deuxième butée transversale interne (42) étant de préférence directement issue de la première demi-coque (10 ; 10')

6. Boîtier motorisé (1 ; 1') d'appareil électroménager de préparation culinaire selon la revendication 3 et la revendication 5, **caractérisé en ce que** ladite au moins une troisième butée transversale interne (43) est directement issue de la première demi-coque (10 ; 10').

7. Boîtier motorisé (1 ; 1') d'appareil électroménager de préparation culinaire selon l'une des revendications 5 ou 6, **caractérisé en ce que** l'enveloppe extérieure (3 ; 3') comprend une deuxième demi-coque (20 ; 20') entourant partiellement le moteur électrique à courant alternatif (5), la première demi-coque (10 ; 10') étant de préférence directement assemblée avec la deuxième demi-coque (20 ; 20').

8. Boîtier motorisé (1 ; 1') d'appareil électroménager de préparation culinaire selon l'une des revendications 1 à 7, **caractérisé en ce que** l'enveloppe extérieure (3 ; 3') comporte deux premières butées latérales internes (51), **en ce que** le stator (9) est maintenu transversalement par rapport à la direction définie par l'axe de rotation (8) entre les deux premières butées latérales internes (51), les deux premières butées latérales internes (51) étant de préférence plus proches de ladite au moins une deuxième butée transversale interne (42) que de ladite au moins une première butée transversale interne (41).

9. Boîtier motorisé (1 ; 1') d'appareil électroménager de préparation culinaire selon la revendication 8 et selon l'une des revendications 5 à 7, **caractérisé en ce que** les deux premières butées latérales internes (51) sont directement issues de la première demi-coque (10 ; 10').

10. Boîtier motorisé (1 ; 1') d'appareil électroménager de préparation culinaire selon l'une des revendications 1 à 9, **caractérisé en ce que** l'enveloppe extérieure (3 ; 3') comporte deux deuxièmes butées latérales internes (52), **en ce que** le stator (9) est maintenu transversalement par rapport à la direction définie par l'axe de rotation (8) entre les deux deuxièmes butées latérales internes (52), et **en ce que** le stator (9) s'étend principalement selon la direction définie par l'axe de rotation (8) entre les premières butées latérales internes (51) et les deuxièmes butées latérales internes (52), dans la direction transversale à l'axe de rotation (8) les deux deuxièmes butées latérales internes (52) étant de préférence plus souples que les deux premières butées latérales internes (51).

11. Boîtier motorisé (1 ; 1') d'appareil électroménager de préparation culinaire selon la revendication 10 et selon la revendication 7, **caractérisé en ce que** les deux deuxièmes butées latérales internes (52) sont directement issues de la première demi-coque (10 ; 10'), et **en ce que** les deux deuxièmes butées latérales internes (52) présentent chacune une section incurvée et comportent deux bords latéraux (52a, 52b) configurés pour venir en appui contre le stator (9), et **en ce que** la deuxième demi-coque (20) comporte deux quatrièmes butées transversales internes (44) configurées chacune pour venir en appui contre l'une des deuxièmes butées latérales internes (52) entre les deux bords latéraux (52a, 52b) à l'opposé du stator (9) afin de repousser ladite deuxième butée latérale interne (52) vers le stator (9) lorsque la première demi-coque (10 ; 10') et la deuxième demi-coque (20 ; 20') sont assemblées.

12. Boîtier motorisé (1') d'appareil électroménager de préparation culinaire selon l'une des revendications 1 à 11, **caractérisé en ce que** le stator (9) est maintenu latéralement à l'intérieur de l'enveloppe extérieure (3') par au moins un élément amortisseur agencé entre le stator (9) et l'enveloppe extérieure (3'), le stator (9) étant de préférence maintenu latéralement à l'intérieur de l'enveloppe extérieure (3') entre un premier élément amortisseur (61) et un deuxième élément amortisseur (62).

13. Boîtier motorisé (1') d'appareil électroménager de préparation culinaire selon la revendication 12, **caractérisé en ce que** le premier élément amortisseur (61) et le deuxième élément amortisseur (62) sont annulaires et **en ce que** l'enveloppe extérieure (3') comporte un premier élément de retenue interne (63), sur lequel est monté le premier élément amortisseur (61), et un deuxième élément de retenue interne (64), sur lequel est monté le deuxième élément amortisseur (62).

14. Boîtier motorisé (1') d'appareil électroménager de préparation culinaire selon la revendication 7 et selon la revendication 13, **caractérisé en ce que** le premier élément amortisseur (61) est porté par la première demi-coque (10') et **en ce que** le deuxième élément amortisseur (62) est porté par la deuxième demi-coque (20').

## Patentansprüche

1. Motorisiertes Gehäuse (1; 1') einer Haushaltseinrichtung für kulinarische Zubereitung, umfassend eine äußere Hülle (3; 3'), die eine innere Aufnahme (4) definiert, und einen Wechselstrom-Elektromotor (5), der in der inneren Hülle (4) eingerichtet ist, wobei der Wechselstrom-Elektromotor (5) einen Rotor (6), der einen entlang einer Drehachse (8) drehbeweglichen Antrieb (7) trägt, und einen Stator (9) umfasst, wobei die äußere Hülle (3; 3') mindestens einen ersten inneren querverlaufenden Anschlag (41) umfasst und wobei der Stator (9) entlang der von der Drehachse (8) definierten Richtung zwischen dem mindestens einen ersten inneren querverlaufenden Anschlag (41) und mindestens einem zweiten inneren querverlaufenden Anschlag (42) gehalten wird, wobei die äußere Hülle (3; 3') den mindestens einen zweiten inneren querverlaufenden Anschlag (42) umfasst, wobei der Stator (9) unmittelbar zwischen dem mindestens einen ersten inneren querverlaufenden Anschlag (41) und dem mindestens einen zweiten inneren querverlaufenden Anschlag (42) gehalten wird, **dadurch gekennzeichnet, dass** der Stator einen ersten Bügel (31) und einen zweiten Bügel (32) umfasst, die beiderseits eines Blechstapels (30) entlang der Drehachse (8) angebracht sind, dadurch, dass der mindestens eine zweite innere querverlaufende Anschlag (42) entlang der von der Drehachse (8) definierten Richtung flexibler ist als der mindestens eine erste innere querverlaufende Anschlag (41), dadurch, dass der erste Bügel (31) eine erste Endwand (31a) aufweist, die sich in Bezug auf die von der Drehachse (8) definierten Richtung querverlaufend erstreckt, dadurch, dass der zweite Bügel (32) eine zweite Endwand (32a) aufweist, die sich in Bezug auf die von der Drehachse (8) definierten Richtung querverlaufend erstreckt, dadurch, dass der mindestens eine erste innere querverlaufende Anschlag (41) an der ersten Endwand (31a) des ersten Bügels (31) anliegt und dadurch, dass der mindestens eine zweite innere querverlaufende Anschlag (42) an der zweiten Endwand (32a) des zweiten Bügels (32) anliegt.

2. Motorisiertes Gehäuse (1; 1') einer Haushaltseinrichtung für kulinarische Zubereitung nach Anspruch 1, **dadurch gekennzeichnet, dass** der mindestens eine erste innere querverlaufende Anschlag (41) zwischen dem Antrieb (7) und dem Stator (9) eingerichtet ist.

3. Motorisiertes Gehäuse (1; 1') einer Haushaltseinrichtung für kulinarische Zubereitung nach einem der Ansprüche 1 oder 2, **dadurch gekennzeichnet, dass** die äußere Hülle (3; 3') mindestens einen dritten inneren querverlaufenden Anschlag (43) umfasst, der entlang der von der Drehachse (8) definierten Richtung starrer ist als der zweite innere querverlaufende Anschlag (42), und dadurch, dass der Stator (9) entlang der von der Drehachse (8) definierten Richtung zwischen dem mindestens einen ersten inneren querverlaufenden Anschlag (41) und dem mindestens einen dritten inneren querverlaufenden Anschlag (43) blockiert ist.

4. Motorisiertes Gehäuse (1; 1') einer Haushaltseinrichtung für kulinarische Zubereitung nach einem der Ansprüche 1 bis 3, **dadurch gekennzeichnet, dass** die äußere Hülle (3; 3') zwei erste innere querverlaufende Anschläge (41), die beiderseits der Drehachse (8) eingerichtet sind, und zwei zweite innere querverlaufende Anschläge (42), die beiderseits der Drehachse (8) eingerichtet sind, umfasst, wobei die zweiten inneren querverlaufenden Anschläge (42) entlang der von der Drehachse (8) definierten Richtung flexibler sind als die ersten inneren querverlaufenden Anschläge (41), und dadurch, dass der Stator (9) entlang der von der Drehachse (8) definierten Richtung zwischen den zwei ersten inneren querverlaufenden Anschlägen (41) und den zwei zweiten inneren querlaufenden Anschlägen (42) gehalten wird.

5. Motorisiertes Gehäuse (1; 1') einer Haushaltseinrichtung für kulinarische Zubereitung nach einem der Ansprüche 1 bis 4, **dadurch gekennzeichnet, dass** die äußere Hülle (3; 3') eine erste Halbschale (10; 10') umfasst, die den Wechselstrom-Elektromotor (5) teilweise umgibt, und dadurch, dass der mindestens eine erste innere querverlaufende Anschlag (41) unmittelbar aus der ersten Halbschale (10; 10') hervorgeht, wobei der mindestens eine zweite querverlaufende Anschlag (42) vorzugsweise unmittelbar aus der ersten Halbschale (10; 10') hervorgeht

6. Motorisiertes Gehäuse (1; 1') einer Haushaltseinrichtung für kulinarische Zubereitung nach Anspruch 3 und Anspruch 5, **dadurch gekennzeichnet, dass** der mindestens eine dritte innere querverlaufende Anschlag (43) unmittelbar aus der ersten Halbschale (10; 10') hervorgeht.

7. Motorisiertes Gehäuse (1; 1') einer Haushaltseinrichtung für kulinarische Zubereitung nach einem der Ansprüche 5 oder 6, **dadurch gekennzeichnet, dass** die äußere Hülle (3; 3') eine zweite Halbschale (20; 20') umfasst, die den Wechselstrom-Elektromotor (5) teilweise umgibt, wobei die erste Halbschale (10; 10') vorzugsweise unmittelbar mit der zweiten Halbschale (20; 20') zusammengefügt ist.

8. Motorisiertes Gehäuse (1; 1') einer Haushaltseinrichtung für kulinarische Zubereitung nach einem der Ansprüche 1 bis 7, **dadurch gekennzeichnet, dass** die äußere Hülle (3; 3') zwei erste innere seitliche Anschläge (51) umfasst, dadurch, dass der Stator (9) in Bezug auf die von der Drehachse (8) definierten Richtung querverlaufend zwischen den zwei ersten inneren seitlichen Anschlägen (51) gehalten wird, wobei die zwei ersten inneren seitlichen Anschläge (51) vorzugsweise näher an dem mindestens einen zweiten inneren querverlaufenden Anschlag (42) sind als der mindestens eine erste innere querverlaufende Anschlag (41).

9. Motorisiertes Gehäuse (1; 1') einer Haushaltseinrichtung für kulinarische Zubereitung nach Anspruch 8 und nach einem der Ansprüche 5 bis 7, **dadurch gekennzeichnet, dass** die zwei ersten inneren seitlichen Anschläge (51) unmittelbar aus der ersten Halbschale (10; 10') hervorgehen.

10. Motorisiertes Gehäuse (1; 1') einer Haushaltseinrichtung für kulinarische Zubereitung nach einem der Ansprüche 1 bis 9, **dadurch gekennzeichnet, dass** die äußere Hülle (3; 3') zwei zweite innere seitliche Anschläge (52) umfasst, dadurch, dass der Stator (9) in Bezug auf die von der Drehachse (8) definierten Richtung querverlaufend zwischen den zwei zweiten inneren seitlichen Anschlägen (52) gehalten wird und dadurch, dass sich der Stator (9) im Wesentlichen entlang der von der Drehachse (8) definierten Richtung zwischen den ersten inneren seitlichen Anschlägen (51) und den zweiten inneren seitlichen Anschlägen (52) erstreckt, wobei in der Richtung querverlaufend zur Drehachse (8) die zwei zweiten inneren seitlichen Anschläge (52) vorzugsweise flexibler sind als die zwei ersten inneren seitlichen Anschläge (51).

11. Motorisiertes Gehäuse (1; 1') einer Haushaltseinrichtung für kulinarische Zubereitung nach Anspruch 10 und nach Anspruch 7, **dadurch gekennzeichnet, dass** die zwei zweiten inneren seitlichen Anschläge (52) unmittelbar aus der ersten Halbschale (10; 10') hervorgehen und dadurch, dass die zwei zweiten inneren seitlichen Anschläge (52) jeweils einen gekrümmten Abschnitt aufweisen und zwei Seitenränder (52a, 52b) umfassen, die dazu konfiguriert sind, an dem Stator (9) anzuliegen, und dadurch, dass die zweite Halbschale (20) zwei vierte innere querverlaufende Anschläge (44) umfasst, die jeweils dazu konfiguriert sind, an einem der zweiten inneren seitlichen Anschläge (52) zwischen den zwei Seitenrändern (52a, 52b) gegenüber vom Stator (9) anzuliegen, um den zweiten inneren seitlichen Anschlag (52) zum Stator (9) hin wegzudrängen, wenn die erste Halbschale (10; 10') und die zweite Halbschale (20; 20') zusammengefügt sind.

12. Motorisiertes Gehäuse (1') einer Haushaltseinrichtung für kulinarische Zubereitung nach einem der Ansprüche 1 bis 11, **dadurch gekennzeichnet, dass** der Stator (9) von mindestens einem zwischen dem Stator (9) und der äußeren Hülle (3') eingerichteten Dämpfungselement seitlich im Inneren der äußeren Hülle (3') gehalten wird, wobei der Stator (9) vorzugsweise seitlich im Inneren der äußeren Hülle (3') zwischen einem ersten Dämpfungselement (61) und einem zweiten Dämpfungselement (62) gehalten wird.

13. Motorisiertes Gehäuse (1') einer Haushaltseinrichtung für kulinarische Zubereitung nach Anspruch 12, **dadurch gekennzeichnet, dass** das erste Dämpfungselement (61) und das zweite Dämpfungselement (62) ringförmig sind und dadurch, dass die äußere Hülle (3') ein erstes inneres Rückhalteelement (63), auf dem das erste Dämpfungselement (61) angebracht ist, und ein zweites inneres Rückhalteelement (64), auf dem das zweite Dämpfungselement (62) angebracht ist, umfasst.

14. Motorisiertes Gehäuse (1') einer Haushaltseinrichtung für kulinarische Zubereitung nach Anspruch 7 und nach Anspruch 13, **dadurch gekennzeichnet, dass** das erste Dämpfungselement (61) von der ersten Halbschale (10') getragen wird und dadurch, dass das zweite Dämpfungselement (62) von der zweiten Halbschale (20') getragen wird.

## Claims

1. Motorised casing (1; 1') of a household appliance for culinary preparation, comprising an outer case (3; 3') defining an inner housing (4) and an electric motor with alternating current (5) arranged in the inner housing (4), the electric motor with alternating current (5) comprising a rotor (6) carrying a driver (7) mobile in rotation about an axis of rotation (8), and a stator (9), wherein the outer case (3; 3') comprises at least one first inner transverse abutment (41), and wherein the stator (9) is held in the direction defined by the axis of rotation (8) between said at least one first inner transverse abutment (41) and at least one second inner transverse abutment (42), the outer case (3; 3') comprising said at least one second inner transverse abutment (42), the stator (9) being held directly between said at least one first inner transverse abutment (41) and said at least one second inner transverse abutment (42), **characterised in that** the stator comprises a first bracket (31) and a second bracket (32) mounted on either side of the stack of sheets (30) about the axis of rotation (8), **in that** said at least one second inner transverse abutment (42) is more flexible in the direction defined by the axis of rotation (8) than said at least one first inner transverse abutment (41), **in that** the first bracket (31) has a first end wall (31a) extending transversally with respect to the direction defined by the axis of rotation (8), **in that** the second bracket (32) has a second end wall (32a) extending transversally with respect to the direction defined by the axis of rotation (8), **in that** said at least one first inner transverse abutment (41) abuts against the first end wall (31a) of the first bracket (31) and **in that** said at least one second inner transverse abutment (42) abuts against the second end wall (32a) of the second bracket (32).

2. Motorised casing (1; 1') of a household appliance for culinary preparation according to claim 1, **characterised in that** said at least one first inner transverse abutment (41) is arranged between the driver (7) and the stator (9).

3. Motorised casing (1; 1') of a household appliance for culinary preparation according to one of claims 1 or 2, **characterised in that** the outer case (3; 3') comprises at least one third inner transverse abutment (43), more rigid in the direction defined by the axis of rotation (8) than the second inner transverse abutment (42), and **in that** the stator (9) is blocked in the direction defined by the axis of rotation (8) between said at least one first inner transverse abutment (41) and said at least one third inner transverse abutment (43).

4. Motorised casing (1; 1') of a household appliance for culinary preparation according to one of claims 1 to 3, **characterised in that** the outer case (3; 3') comprises two first inner transverse abutments (41) arranged on either side of the axis of rotation (8) and two second inner transverse abutments (42) arranged on either side of the axis of rotation (8), the second inner transverse abutments (42) being more flexible in the direction defined by the axis of rotation (8) than the first inner transverse abutments (41), and **in that** the stator (9) is held in the direction defined by the axis of rotation (8) between the two first inner transverse abutments (41) and the two second inner transverse abutments (42).

5. Motorised casing (1; 1') of a household appliance for culinary preparation according to one of claims 1 to 4, **characterised in that** the outer case (3; 3') comprises a first half-shell (10; 10') partially surrounding the electric motor with alternating current (5), and **in that** said at least one first inner transverse abutment (41) directly comes from the first half-shell (10; 10'), said at least one second inner transverse abutment (42) preferably directly coming from the first half-shell (10; 10').

6. Motorised casing (1; 1') of a household appliance for culinary preparation according to claim 3 and claim 5, **characterised in that** said at least one third inner transverse abutment (43) directly comes from the first half-shell (10; 10').

7. Motorised casing (1; 1') of a household appliance for culinary preparation according to one of claims 5 or 6, **characterised in that** the outer case (3; 3') comprises a second half-shell (20; 20') partially surrounding the electric motor with alternating current (5), the first half-shell (10; 10') preferably being directly assembled with the second half-shell (20; 20').

8. Motorised casing (1; 1') of a household appliance for culinary preparation according to one of claims 1 to 7, **characterised in that** the outer case (3; 3') comprises two first inner side abutments (51), **in that** the stator (9) is held transversally with respect to the direction defined by the axis of rotation (8) between the two first inner side abutments (51), the two first inner side abutments (51) preferably being closer to said at least one second inner transverse abutment (42) than said at least one first inner transverse abutment (41).

9. Motorised casing (1; 1') of a household appliance for culinary preparation according to claim 8 and according to one of claims 5 to 7, **characterised in that** the two inner side abutments (51) directly come from the first half-shell (10; 10').

10. Motorised casing (1; 1') of a household appliance for culinary preparation according to one of claims 1 to 9, **characterised in that** the outer case (3; 3') comprises two second inner side abutments (52), **in that** the stator (9) is held transversally with respect to the direction defined by the axis of rotation (8) between the two second inner side abutments (52), and **in that** the stator (9) extends mainly in the direction defined by the axis of rotation (8) between the first inner side abutments (51) and the second inner side abutments (52), in the direction transversal to the axis of rotation (8), the two second inner side abutments (52) preferably being more flexible than the two first inner side abutments (51).

11. Motorised casing (1; 1') of a household appliance for culinary preparation according to claim 10 and according to claim 7, **characterised in that** the two second inner side abutments (52) directly come from the first half-shell (10; 10'), and **in that** the two second inner side abutments (52) each have a curved cross-section and comprise two side edges (52a, 52b) configured to bear against the stator (9), and **in that** the second half-shell (20) comprises two fourth inner transverse abutments (44) each configured to bear against one of the second inner side abutments (52) between the two side edges (52a, 52b) opposite the stator (9) in order to repel said second inner side abutment (52) towards the stator (9) when the first half-shell (10; 10') and the second half-shell (20; 20') are assembled.

12. Motorised casing (1') of a household appliance for culinary preparation according to one of claims 1 to 11, **characterised in that** the stator (9) is held laterally inside the outer case (3') by at least one damping element arranged between the stator (9) and the outer case (3'), the stator (9) preferably being held laterally inside the outer case (3') between a first damping element (61) and a second damping element (62).

13. Motorised casing (1') of a household appliance for culinary preparation according to claim 12, **characterised in that** the first damping element (61) and the second damping element (62) are annular and **in that** the outer case (3') comprises a first inner retaining element (63), on which is mounted the first damping element (61), and a second inner retaining element (64), on which is mounted the second damping element (62).

14. Motorised casing (1') of a household appliance for culinary preparation according to claim 7 and according to claim 13, **characterised in that** the first damping element (61) is carried by the first half-shell (10') and **in that** the second damping element (62) is carried by the second half-shell (20').
